Europäisches Patentamt

European Patent Office

Office européen des brevets

(19)

(11) Numéro de publication: **0 372 437**
**A1**

## (12) DEMANDE DE BREVET EUROPEEN

(21) Numéro de dépôt: 89122260.6

(51) Int. Cl.⁵: **H01S 3/02, H01S 3/06**

(22) Date de dépôt: 02.12.89

(30) Priorité: 05.12.88 FR 8816039

(43) Date de publication de la demande:
13.06.90 Bulletin 90/24

(84) Etats contractants désignés:
CH DE GB LI

(71) Demandeur: **ASULAB S.A.**
**Faubourg du Lac 6**
**CH-2502 Bienne(CH)**

(72) Inventeur: **Jürg, Steffen**
**Dorf**
**CH-3655 Sigriswil(CH)**

(74) Mandataire: **Caron, Gérard**
**ICB Ingénieurs Conseils en Brevets SA**
**Passage Max. Meuron 6**
**CH-2001 Neuchâtel(CH)**

(54) **Laser muni d'un dispositif de fixation perfectionné de son milieu actif.**

(57) Laser à pompage optique comprenant des moyens de suspension (7) du barreau (2) ayant une élasticité inhérente pour assurer le pincement élastique de ce dernier. Les moyens de suspension (7) comprennent au moins deux organes de suspension (17a, 17b) ayant une forme générale plane s'étendant parallèlement aux faces de pompage du barreau. Chaque organe de suspension présente au moins une zone périphérique de fixation (19a, 19b), une zone centrale de serrage (20a, 20b) et une zone intermédiaire (21a, 21b) élastiquement déformable reliant ces dernières.

FIG.1

EP 0 372 437 A1

# LASER MUNI D'UN DISPOSITIF DE FIXATION PERFECTIONNE DE SON MILIEU ACTIF

L'invention concerne les lasers, notamment les lasers à pompage optique utilisant comme milieu actif, des barreaux dits barreaux "SLAB" selon la désignation anglo-saxonne, et plus particulièrement un dispositif de fixation de ces barreaux dans les lasers.

On connaît déjà du document US 4,378,601 un laser à pompage optique ayant un dispositif de fixation de barreau "SLAB". Ce laser comprend essentiellement un boîtier destiné à recevoir le barreau et dans lequel circule un fluide de refroidissement. En outre, le laser comprend une source lumineuse disposée de part et d'autre du barreau afin de réaliser un pompage optique dans le milieu actif. Le barreau est monté dans un dispositif de fixation qui peut être introduit dans le boîtier ou en être retiré.

Ce dispositif de fixation comprend, d'une part, des premiers organes de support longitudinaux ayant une section en forme de U, et qui sont munis d'oreilles à leurs extrémités, ces organes enveloppant la face supérieure et la face inférieure du barreau et, d'autre part, des seconds organes de support ayant une configuration complémentaire de celles des extrémités du barreau pour pouvoir s'y fixer. Les oreilles des premiers organes de support coopèrent avec des fentes ménagées dans les seconds organes de support pour maintenir le barreau dans un cadre rigide destiné à être installé dans un boîtier.

Ce dispositif de fixation présente l'avantage de pouvoir rigidement maintenir le barreau dans le laser sans engendrer de contraintes mécaniques dans ce dernier. On évite ainsi les risques de variations d'indice de réfraction dans le barreau, ces variations ayant pour effet d'altérer la qualité du faisceau laser.

Cependant, ce dispositif fait apparaître un inconvénient. En effet, puisque le barreau baigne totalement dans le fluide de refroidissement, mis à part ses extrémités, les faces latérales du barreau sont refroidies comme ses faces supérieures et inférieures. Par suite, le gradient de température suivant un trajet perpendiculaire aux faces supérieure et inférieure du barreau varie selon que ce trajet est proche ou éloigné d'une face latérale, et ceci induit des effets de bords diminuant le rendement du laser.

Un autre type de dispositif de fixation du barreau dans un laser, décrit dans le document US 4,761,789, tente de remédier à cet inconvénient en isolant les faces latérales du barreau du fluide de refroidissement. Ce laser comprend un barreau placé entre deux lames transparentes, le barreau et les lames étant disposés entre deux plaques de maintien, chacune d'elles comportant une ouverture rectangulaire qui s'étend sensiblement sur la longueur du barreau. Des garnitures d'étanchéité assurent l'étanchéité à la périphérie des ouvertures entre les lames et les plaques de maintien. Sur ces ouvertures sont destinés à s'ajuster, par exemple, des réflecteurs de pompage ayant sensiblement une section en forme de U qui délimitent avec les lames un espace de circulation pour un fluide de refroidissement ainsi qu'un logement pour une source d'excitation optique du barreau. Enfin, entre chaque plaque de maintien et le châssis extérieur est prévu un cadre d'entretoisement délimitant un second canal de refroidissement, l'ensemble étant serré mécaniquement pour garantir une bonne fixation du barreau et une bonne étanchéité.

Toutefois, la solution proposée par le document susmentionné n'apporte pas non plus entière satisfaction. En effet, lors du serrage mécanique de l'ensemble, l'effort de serrage n'est pas contrôlé, si bien qu'il est très difficile d'obtenir un serrage approprié.

Si le serrage est trop important, on induit des contraintes mécaniques dans le barreau et il en résulte des variations d'indice de réfraction qui altèrent la qualité du faisceau.

Par contre, si le serrage est trop faible, la transmission de la quantité de chaleur à travers les lames, les plaques de maintien, etc... diminue, faisant chuter par là-même le rendement du laser.

L'invention a donc pour but principal de remédier aux inconvénients de l'art antérieur susmentionné en fournissant un laser muni d'un dispositif de fixation d'un barreau éliminant l'influence de la force de serrage tout en isolant les faces latérales du barreau du liquide de refroidissement.

A cet effet, la présente invention a pour objet un laser à pompage optique dans lequel le milieu laser est formé par un barreau ayant au moins deux faces opposées entre lesquelles le faisceau laser engendré se propage selon un trajet en zigzag par réflexion totale sur lesdites faces, ledit barreau étant disposé dans un châssis avec lequel il délimite deux à deux quatre volumes dont les faces latérales du barreau forment au moins indirectement des portions de parois, les volumes opposés correspondant aux faces de pompage du barreau recevant des moyens d'excitation optique et étant destinés à être parcourus par un fluide de refroidissement, le laser comprenant également des moyens de suspension qui assurent d'une part la solidarisation par serrage du barreau par rapport au chassis en s'appuyant sur ledit châssis, et d'autre part, la séparation deux à deux desdits volumes.

Conformément à l'invention, les moyens de suspension ont une élasticité inhérente pour assurer le pincement élastique du barreau, et prennent appui au moins sur des zones voisines du pourtour des faces de pompage.

Grâce aux caractéristiques élastiques des moyens de suspension, la dilation du barreau peut être aisément absorbée lors d'importantes variations de température. Il en résulte ainsi une absence de contraintes mécaniques dans le barreau si bien que le rendement et la qualité du faisceau laser sont augmentés.

Par ailleurs, grâce à ce dispositif, on facilite la fixation du barreau dans le laser tout en éliminant l'influence de la force de serrage sur les caractéristiques du faisceau.

L'invention a aussi pour objet un élément actif de laser constitué par un barreau ayant au moins deux faces opposées entre lesquelles le faisceau laser engendré se propage selon un trajet en zigzag par réflexion totale sur lesdites faces et des moyens de suspension du barreau.

Cet élément actif et remarquable en ce que les moyens de suspension comprennent au moins deux organes de suspension ayant une forme générale plane s'étendant sensiblement parallèlement aux faces de pompage, et un cadre de liaison, chaque organes de suspension présentant au moins une zone périphérique de fixation, une zone centrale de serrage et une zone intermédiaire élastiquement déformable reliant ces dernières et en ce que, la zone de serrage pince élastiquement le barreau au moins sur les zones périphériques respectives des faces de pompage cependant que la zone périphérique de fixation est fixée rigidement au cadre de liaison.

Un tel élément constitue donc un sous-ensemble indépendant qui peut être facilement préparé à l'avance et stocké et, le cas échéant, testé avant d'être monté dans le laser.

En outre, cet élément peut être installé et changé rapidement sans difficulté.

D'autres caractéristiques et avantages de l'invention apparaîtront clairement à la lecture de la description qui suit de modes de réalisation non limitatifs en liaison avec les dessins ci-joints parmi lesquels :

- la figure 1 est une vue schématique en perspective et en éclaté d'un laser réalisé selon l'invention ;.

- la figure 2 est une vue partielle en coupe, selon la ligne II-II de la figure 1 et à échelle agrandie, d'un premier mode de réalisation des moyens de suspension du barreau équipant le laser selon l'invention ;

- les figures 3a, 3b montrent respectivement une vue de côté et une vue de dessus d'un barreau, le châssis et une partie des organes de suspension ayant été omis ;

- la figure 4 est une vue partielle en coupe d'une variante de réalisation de la figure 2 ; et

- la figure 5 est une vue partielle en coupe transversale à échelle agrandie d'un second mode de réalisation des moyens de suspension du barreau équipant le laser selon l'invention.

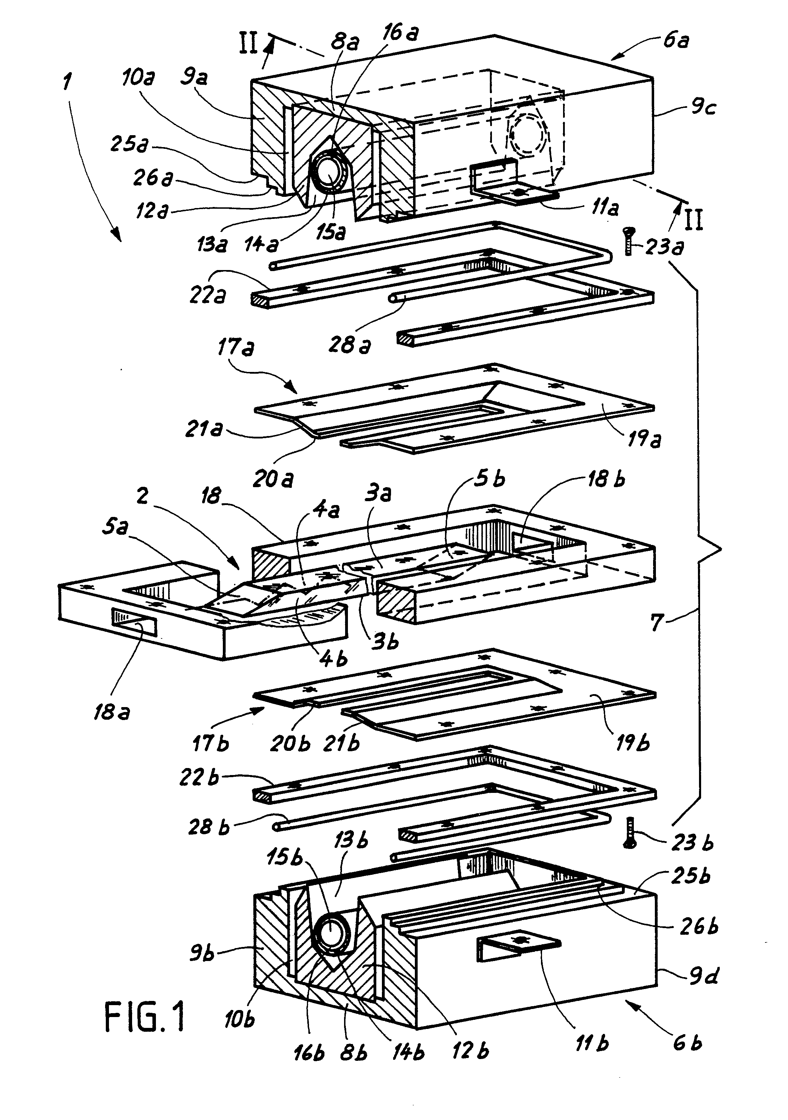

En se référant tout d'abord à la figure 1, on voit un laser à pompage optique, désigné généralement par la référence numérique 1, montrant les caractéristiques essentielles de l'invention.

Un barreau 2 (appelé "SLAB" dans la terminologie anglo-saxonne) constitue le milieu dans lequel l'effet laser est engendré. Dans le mode de réalisation représenté, le barreau 2 présente une section rectangulaire avec deux grandes faces opposées 3a, 3b qui sont, dans ce cas, à la fois les faces de pompage et les faces à réflexion totale pour conférer au faisceau laser cylindrique engendré un trajet en zigzag.

Le barreau 2 présente aussi deux faces latérales 4a, 4b et deux faces d'extrémité 5a, 5b.

Dans l'exemple illustré, les faces d'extrémité sont taillées sur le barreau sensiblement selon l'angle de Brewster $\alpha$ afin de réduire les pertes. Bien entendu, les faces d'extrémité peuvent être également droites ou inclinées de $180° - 2\alpha$ par rapport à l'axe optique du laser.

Le barreau 2 est disposé dans un ensemble comprenant essentiellement un châssis en deux parties 6a, 6b et des moyens de suspension du barreau désignés généralement par la référence numérique 7. Les deux parties s'étendent symétriquement de part et d'autre des faces 3a, 3b du barreau.

Chaque partie de châssis 6a, 6b présente un fond 8a, 8b ayant la forme d'un rectangle allongé a partir duquel s'étendent perpendiculairement deux parois latérales 9a, 9b et deux parois d'extrémité 9c, 9d, définissant une cavité 10a, 10b dans laquelle circule un fluide de refroidissement (non représenté).

Les deux parties du châssis 6a, 6b sont reliées ensemble par l'intermédiaire d'une pluralité de paires de pattes de fixation 11a, 11b - dont seulement une paire est visible au dessin - rapportée sur les parois latérales 9a, 9b et de vis correspondantes (non représentées).

On notera que, dans l'exemple représenté, chaque partie du châssis 6a, 6b, est réalisée par usinage en une seule pièce.

Bien entendu, ces dernières pourraient être réalisées en plusieurs pièces assemblées par vissage ou analogue.

Chaque partie du châssis 6a, 6b comprend en outre un réflecteur de pompage 12a, 12b, fixé rigidement à son fond 8a, 8b. Ces réflecteurs 12a, 12b sont des pièces allongées présentant une section transversale sensiblement en forme de U, et qui s'étendent au-dessus des faces 3a, 3b du barreau sur la totalité de sa longueur. Le fond et les parois latérales de chaque réflecteur 12a, 12b sont réalisés de manière à présenter des faces de réflexion 13a, 13b garnies par exemple, d'une couche d'or.

Les parties de châssis 6a, 6b forment également un support et un logement pour une source d'excitation optique du barreau. Cette source d'excitation est constituée par un tube 14a, 14b recevant une lampe à décharge 15a, 15b et délimitant autour de celle-ci une canalisation 16a, 16b de circulation d'un fluide de refroidissement.

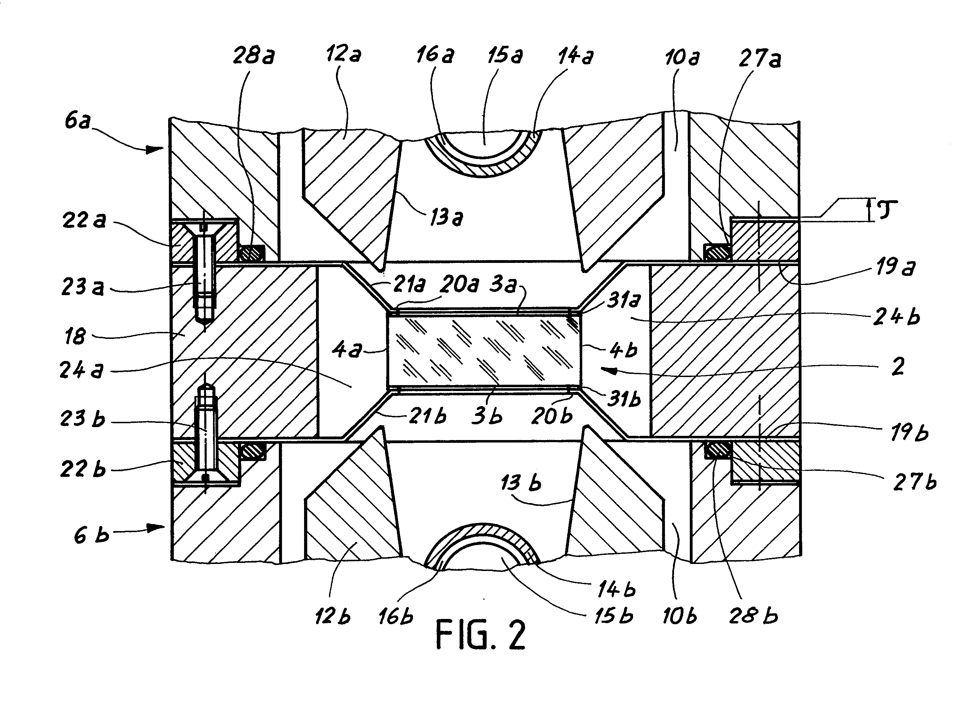

Le laser selon l'invention, illustré aux figures 1 et 2, présente un premier mode de réalisation des moyens de suspension 7. Ces derniers constituent un élément actif de laser indépendant et comprennent essentiellement deux organes de suspension 17a, 17b ayant chacun la configuration d'une feuille élastiquement déformable et un cadre de liaison 18. Dans le mode de réalisation représenté, les feuilles ont chacune la forme d'une cuvette à fond ajouré.

Ces organes de suspension 17a, 17b sont réalisés, de préférence, par emboutissage à froid à partir d'une feuille d'un alliage métallique d'environ 1/10 de millimètre d'épaisseur. On notera au passage qu'un tel procédé de fabrication présente l'avantage d'être rapide et économique tout en conférant aux pièces obtenues une grande précision dimensionnelle.

Chaque organe de suspension 17a, 17b a une zone périphérique de fixation 19a, 19b destinée à coopérer avec le cadre de liaison 18 et une partie du chassis 6a, 6b, une zone de serrage 20a, 20b destinée à maintenir le barreau 2 et une zone intermédiaire 21a, 21b reliant la zone périphérique de fixation 19a, 19b et la zone de serrage 20a, 20b tout en conférant auxdits organes une bonne élasticité.

Comme il ressort clairement des figures, dans ce mode de réalisation la zone de serrage 20a, 20b et la zone périphérique de fixation 19a, 19b ne sont pas dans un même plan. En outre, la largeur de la zone de serrage 20a, 20b est très inférieure à la largeur de la zone périphérique de fixation 19a, 19b afin de ne pas diminuer la surface active du barreau. Pour fixer les idées, la zone de serrage a une largeur d'environ 0,5 mm tandis que la zone périphérique de fixation a une largeur d'environ 10 mm.

Dans ce mode de réalisation, la zone périphérique de fixation 19a, 19b de chaque organe de suspension 17a, 17b, est serrée entre le cadre de liaison 18 - constituant dans ce cas particulier un cadre d'entretoisement - et un cadre de bridage 22a, 22b. L'ensemble est maintenu par exemple au moyen d'une pluralité de vis 23a, 23b (symbolisées par des traits d'axes) régulièrement réparties à la périphérie du cadre de bridage 22a, 22b, cependant que la zone de serrage 20a, 20b, maintient le barreau 2 par les faces 3a, 3b du barreau.

On peut aussi prévoir, dans une variante de réalisation des moyens de séparation du barreau, que ce dernier soit serré par ses faces latérales.

Bien entendu, le cadre de liaison 18 comprend deux ouvertures 18a, 18b ménagées en regard des faces 5a, 5b du barreau, afin de laisser le passage pour le faisceau laser engendré dans ce dernier.

Lorsque l'ensemble des éléments constituant les moyens de suspension 7 est assemblé, le barreau 2 est pincé élastiquement entre les zones de serrage 20a, 20b de ces derniers si bien que l'on élimine tout serrage excessif susceptible d'entraîner des contraintes mécaniques dans le barreau.

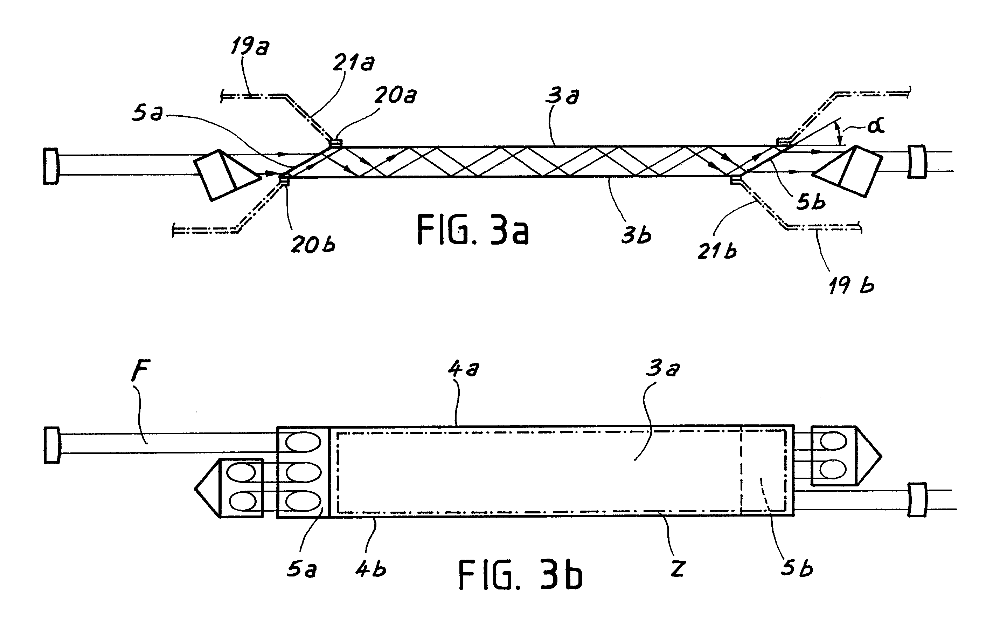

Les zones de serrage 20a, 20b sont fixées aux faces 3a, 3b du barreau par soudage, et de préférence, dans une zone de bord Z où le faisceau ne se réflechit pas (figures 3a, 3b ) afin de ne pas diminuer le rendement du faisceau.

Le soudage des zones de serrage 20a, 20b peut être réalisé par des techniques de soudage classiques à chaud ou à froid telles que le brasage métallique, l'utilisation d'un joint en "glass frit" ou d'un joint en indium, ou analogue.

De préférence, les organes de suspension et le cordon de soudure sont choisis parmi des matériaux présentant des caractéristiques de dilatation thermique sensiblement égales à celles du barreau. Par exemple pour un barreau YAG, on utilisera avantageusement un organe de support en un alliage comprenant 28% de Nickel, 23% de Cobalt et 49% de Fer, tel que le "Vacovit 70" (marque déposée) et un cordon de soudure en matériau "Carpenter Glass Sealing 45-5" (marque déposée).

L'utilisation de tels matériaux présente notamment l'avantage de conférer à l'ensemble une bonne étanchéité et une grande stabilité dans le temps.

On notera aussi que grâce au cordon de soudure 31a, 31b , on assure le maintien du barreau en même temps que l'étanchéité entre la cavité 10a, 10b et les canaux 24a, 24b définis entre les organes de suspension 17a, 17b et les faces latérales 4a, 4b du barreau. Ces canaux 24a, 24b sont ainsi isolés du fluide de refroidissement, ce qui supprime les effets de bord dûs au refroidissement des faces latérales 4a, 4b.

Le cadre de bridage 22a, 22b a deux rôles. Le premier rôle consiste à protéger les organes de suspension 17a, 17b contre un serrage direct et/ou excessif des vis 23a, 23b, qui risquerait d'endommager ces derniers, le second rôle consistant à centrer l'ensemble des organes de suspension et du barreau dans le châssis.

En effet, chaque partie du châssis 6a, 6b comprend à l'extrémité de ses parois latérales et ses parois d'extrémité deux décrochements formant deux marches successives 25a, 25b, 26a, 26b.

La première marche 25a, 25b coopère avec le cadre de bridage 22a, 22b au moment de l'assemblage des moyens de suspension 7 avec les parties de châssis 6a, 6b. Ainsi, le barreau 2 est aisément et systématiquement monté dans une position correcte, c'est-à-dire de sorte que ses faces 3a, 3b sont directement en regard des réflecteurs de pompage 12a, 12b.

La seconde marche 26a, 26b coopère, lors du montage, avec le cadre de bridage 22a, 22b et une partie de la zone de serrage 20a, 20b de l'organe de suspension 17a, 17b pour délimiter un logement 27a, 27b destiné à recevoir un joint d'étanchéité 28a, 28b assurant l'étanchéité entre l'extérieur et le canal de refroidissement 10a, 10b.

On notera à ce propos que, afin d'écraser le joint 28a, 28b contre l'organe de suspension 17a, 17b et ainsi d'assurer une bonne étanchéité de l'ensemble, il est utile de prévoir un jeu J entre le plan de la marche 25a, 25b et la face supérieure du cadre de bridage 22a, 22b.

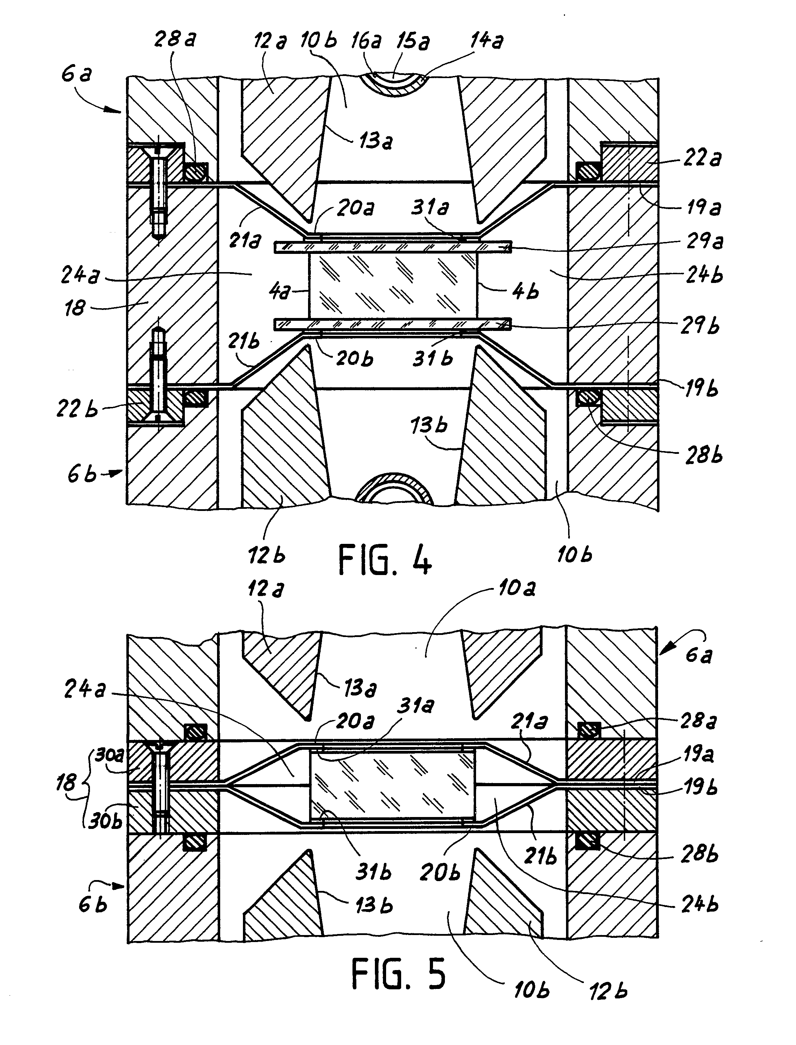

A la figure 4, est illustrée une variante du premier mode de réalisation du laser selon l'invention dans laquelle les organes de suspension 17a, 17b ne maintiennent pas directement le barreau 2.

Dans ce cas, le barreau est intercalé entre deux lames transparentes 29a, 29b réalisées par exemple en saphir ou analogue et sur lesquelles la zone de serrage 20a, 20b est fixée par des moyens classiques de soudage. De préférence, chaque lame 29a, 29b déborde de chaque côté latéral du barreau 2 d'une distance égale ou supérieure à l'épaisseur de celui-ci.

On notera toutefois que, pour ne pas risquer d'engendrer une flexion des bords des lames 29a, 29b, et par conséquent d'éventuelles contraintes dans le barreau, la fixation des zones de serrage 20a, 20b des organes de suspension est réalisée au droit des bords du barreau.

Par ailleurs, puisque les organes de suspension ne sont pas fixés directement à la surface du barreau, cette variante permet un remplacement aisé du barreau.

De manière avantageuse, ces plaques peuvent constituer un filtre de sélection des fréquences optiques pour l'excitation du barreau, si bien que seules les bandes utiles du spectre de la lumière d'excitation atteignent les faces du barreau, et que l'échauffement dû aux radiations parasites est supprimé.

Enfin, en se référant à la figure 5, on voit un second mode de réalisation d'un laser selon l'invention dans lequel on a désigné les éléments identiques à ceux décrits précédemment par les mêmes références numériques.

Alors que dans le mode de réalisation représenté aux figures 1 à 4, les zones périphériques de fixation 19a, 19b des organes de suspension 17a, 17b sont séparées l'une de l'autre au moyen d'un cadre d'entretoisement 18, dans le second mode de réalisation représenté sur la figure 5, les zones périphériques de fixation 19a, 19b des organes de suspension 17a, 17b sont jointives et serrées ensemble par deux éléments de cadre 30a, 30b.

Il est bien évident que des ouvertures telles que celles ménagées dans le cadre de liaison 18 représenté à la figure 1 doivent être ménagées dans les organes de suspension et dans les éléments de cadre en regard des faces 5a, 5b.

Bien entendu, l'invention n'est pas limitée aux modes de réalisation décrits et l'on peut prévoir des variantes sans sortir de son cadre. On peut notamment prévoir d'utiliser le dispositif selon l'invention dans un laser dans lequel le milieu actif est un milieu actif fluide, ce dernier étant confiné dans une enceinte étanche en un matériau transparent ayant la forme d'un barreau "SLAB".

On peut également prévoir des organes de suspension 17a, 17b réalisés en une seule pièce, ces derniers étant reliés entre eux par une bande de liaison ou analogue. Dans ce cas, la forme en cuvette de chaque organe peut être par exemple simultanément étampée dans une feuille métallique après quoi cette dernière est pliée de façon appropriée.

Dans une autre variante de réalisation de l'invention, chacun desdits organes de suspension 17a, 17b peut être réalisé en verre pressé selon une configuration déterminée par exemple selon la forme d'une cuvette.

Enfin, l'élément actif du laser constitue avantageusement un sous-ensemble barreau / moyens de suspension pouvant être facilement remplacé.

**Revendications**

1. Laser à pompage optique dans lequel le milieu laser est formé par un barreau ayant au moins deux faces opposées (3a, 3b) entre lesquelles le faisceau laser (F) engendré se propage selon un trajet en zigzag par réflexion totale sur lesdites faces, ledit barreau étant disposé dans un châssis (6a, 6b) avec lequel il délimite deux à deux quatre volumes (10a, 10b, 24a, 24b) dont les faces latérales (3a, 3b; 4a, 4b) du barreau forment au moins indirectement des portions de parois, les volumes opposés (10a, 10b) correspondant aux faces de pompage (3a, 3b) du barreau (2) recevant des moyens d'excitation optique (15a, 15b) et étant destinés à être parcourus par un fluide de refroidissement, le laser comprenant également des moyens de suspension (7) qui assurent, d'une part, la solidarisation par serrage du barreau (2) par rapport au châssis en s'appuyant sur ledit châssis (6a, 6b) et, d'autre part, la séparation deux à deux desdits volumes, caractérisé en ce que lesdits moyens de suspension (7) ont une élasticité inhérente pour assurer le pincement élastique du barreau (2) et prennent appui au moins sur des zones voisines (Z) du pourtour des faces de pompage (3a, 3b).

2. Laser selon la revendication 1, caractérisé en ce que les moyens de suspension (7) s'appuient sur la zone de bord (Z) des faces de pompage du barreau.

3. Laser selon la revendicaton 1 ou 2, caractérisée en ce que les moyens de suspension (7) comprennent au moins deux organes de suspension (17a, 17b) ayant une forme générale plane s'étendant parallèlement aux faces de pompage du barreau, chaque organe de suspension présentant au moins une zone périphérique de fixation (19a, 19b), une zone centrale de serrage (20a, 20b) et une zone intermédiaire (21a, 21b) élastiquement déformable reliant ces dernières.

4. Laser selon la revendication 3, caractérisé en ce que chacun des organes de suspension est réalisé sous la forme d'une feuille ayant la configuration d'une cuvette sans fond et en ce que les moyens de suspension (7) comprennent en outre un cadre de liaison (18).

5. Laser selon la revendication 3 ou 4, caractérisé en ce que les moyens de suspension comprennent en outre un cadre d'entretoisement (18) disposé entre la zone périphérique de fixation (19a, 19b) de chaque feuille (17a, 17b).

6. Laser selon la revendication 3 ou 4, caractérisé en ce que le cadre de liaison (18) comprend deux éléments de cadre (30a, 30b) entre lesquels sont serrés les zones périphériques de fixation (19a, 19b) des feuilles.

7. Laser selon l'une quelconque des revendication précèdentes, caractérisé en ce que la zone de serrage (20a, 20b) des feuilles (17a, 17b) est reliée aux faces de pompage (3a, 3b) du barreau par soudage.

8. Laser selon la revendication 7 comportant un barreau (2) intercalé entre deux plaques (29a, 29b) en un matériau transparent, caractérisé en ce que le soudage des zones de serrage (19a, 19b) de chaque feuille (17a, 17b) est réalisé directement sur lesdites plaques (29a, 29b).

9. Laser selon l'une quelconque des revendications précèdentes, caractérisé en ce qu'il comprend en outre des moyens d'étanchéité (28a, 28b, 31a, 31b) pour confiner le fluide de refroidissement dans les canaux de refroidissement (10a, 10b).

10. Laser selon la revendication 9, caractérisé en ce que les moyens d'étanchéité comprennent des garnitures d'étanchéité (28a, 28b) disposées entre la zone périphérique de fixation (19a, 19b) de chaque feuille (17a, 17b) et le châssis (6a, 6b), d'une part, et un cordon de soudure (31a, 31b) disposé entre le barreau (2) et la zone de serrage de chaque feuille (17a, 17b), d'autre part.

11. Laser selon l'une quelconque des revendications précèdentes, caractérisé en ce que les feuilles (17a, 17b) sont réalisées en un matériau ayant sensiblement les mêmes caractéristiques de dilatation thermique que celles du barreau.

12. Laser selon l'une quelconque des revendications précèdentes, caractérisé en ce que le barreau est un barreau en grenat d'yttrium et d'aluminium et les feuilles sont en un alliage à 28% de Nickel, 23% de Cobalt et 49% de Fer.

13. Elément actif de laser constitué par un barreau ayant au moins deux faces opposées (3a, 3b) entres lesquelles le faisceau laser (F) engendré se propage selon un trajet en zigzag par réflexion totale sur lesdites faces et des moyens de suspension (7) du barreau, caractérisé en ce que lesdits moyens de suspension (7) comprennent au moins deux organes de suspension (17a, 17b) ayant une forme générale plane s'étendant sensiblement parallèlement aux faces de pompage, et un cadre de liaison (18), chaque organe de suspension présentant au moins une zone périphérique de fixation (19a, 19b), une zone centrale de serrage (20a, 20b) et une zone intermédiaire (21a, 21b) élastiquement déformable reliant ces dernières, et en ce que la zone de serrage pince élastiquement le barreau au moins sur les zones périphériques (7) respectives des faces de pompage cependant que la zone périphérique de fixation (17a, 17b) est fixée rigidement au cadre de liaison.

14. Elément actif selon la revendication 13, caractérisé en ce que chacun des organes de suspension est réalisé sous la forme d'une feuille ayant la configuration d'une cuvette sans fond.

15. Elément actif selon la revendication 13 ou 14, caractérisé en ce que la zone centrale de serrage (20a, 20b) s'appuie sur la zone de bord (Z) des faces de pompage du barreau.

16. Elément actif selon l'une quelconque des revendications 13 à 15, caractérisé en ce que les moyens de suspension comprennent un cadre d'entretoisement (18) disposé entre la zone périphérique de fixation (19a, 19b) de chaque feuille (17a, 17b).

17. Elément actif selon l'une quelconque des revendications 13 à 15, caractérisé en ce que le cadre de liaison (18) comprend deux éléments de cadre (30a, 30b) entre lesquels sont serrés les zones périphériques de fixation (19a, 19b) des feuilles.

18. Elément actif selon l'une quelconque des revendications 13 à 17, caractérisée en ce que la zone de serrage (20a, 20b) des feuilles (17a, 17b) est reliée aux faces de pompage (3a, 3b) du barreau par soudage.

19. Elément actif selon l'une quelconque des revendications 13 à 17 comportant un barreau (2) intercalé entre deux plaques (29a, 29b) en un matériau transparent, caractérisé en ce que les zones de serrage (19a, 19b) de chaque feuille (17a, 17b) sont reliées directement sur lesdites plaques (29a, 29b) par soudage.

20. Elément actif selon l'une quelconque des revendications 13 à 19, caractérisé en ce qu'il comprend en outre des moyens d'étanchéité (28a, 28b, 31a, 31b) pour confiner le fluide de refroidissement dans les canaux de refroidissement (10a, 10b).

21. Elément actif selon la revendication 20, caractérisé en ce que les moyens d'étanchéité comprennent des garnitures d'étanchéité (28a, 28b) disposées entre la zone périphérique de fixation (19a, 19b) de chaque feuille (17a, 17b) et le châssis (6a, 6b), d'une part, et un cordon de soudure (31a, 31b) disposé entre le barreau (2) et la zone de serrage de chaque feuille (17a, 17b), d'autre part.

22. Elément actif selon l'une quelconque des revendications 13 à 21, caractérisé en ce que les feuilles (17a, 17b) sont réalisées en un matériau ayant sensiblement les mêmes caractéristiques de dilation thermique que celles du barreau (2).

23. Elément actif selon l'une quelconque des revendications 13 à 22, caractérisé en ce que le barreau est un barreau en grenat d'yttrium et d'aluminium et les feuilles sont en un alliage à 28% de Nickel, 23% de Cobalt et 49% de Fer.

FIG.1

FIG. 2

EP 0 372 437 A1

FIG. 3a

FIG. 3b

EP 0 372 437 A1

FIG. 4

FIG. 5

Office européen
des brevets

**RAPPORT DE RECHERCHE EUROPEENNE**

Numero de la demande

EP 89 12 2260

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 468 774 (A.G. ROBBINS) <br> * Colonnes 2,3; figures 1-3 * | 1,11,15 ,21 | H 01 S 3/02 <br> H 01 S 3/06 |
| A | | 8,13,17 | |
| A | US-A-4 653 061 (K. FUKAE) <br> * Résumé; revendication; figures 1-14 * | 9,10,18 ,19 | |
| D,A | US-A-4 761 789 (K. FUKAE) <br> * Colonne 4, lignes 1-5 * | 12,21 | |
| D,A | US-A-4 378 601 (J.M. EGGLESTON et al.) <br> * Résumé; figures 1-16 * | 1,13 | |

**DOMAINES TECHNIQUES RECHERCHES (Int. Cl.5)**

H 01 S

**Le présent rapport a été établi pour toutes les revendications**

| Lieu de la recherche | Date d'achèvement de la recherche | Examinateur |
|---|---|---|
| LA HAYE | 15-01-1990 | MALIC K. |